# FASCICULE DE BREVET EUROPEEN

(11) **EP 3 207 266 B1**
(45) Date de publication et mention de la délivrance du brevet: **22.07.2020**
(21) Numéro de dépôt: 15793862.2
(22) Date de dépôt: 12.10.2015
(51) Int. Cl.: F16C 33/10, F16C 33/12, F16C 33/14, F16C 32/06, F16C 33/20, F02K 1/00, F16C 17/02

(54) **PROCEDE DE FABRICATION D'UN PALIER FLUIDE HYDROSTATIQUE ALVEOLE**
VERFAHREN ZUR HERSTELLUNG EINES HYDROSTATISCHEN FLUIDLAGERS MIT ZELLEN
METHOD FOR PRODUCING A HYDROSTATIC FLUID BEARING WITH CELLS

(30) Priorité: 14.10.2014 FR 1459850
(43) Date de publication de la demande: 23.08.2017
(73) Titulaire: SAFRAN AIRCRAFT ENGINES, 75015 Paris (FR)
(72) Inventeur: GEFFROY, Christian, F-27600 Gaillon (FR); LE FOULON, John-Fitzgerald, F-27120 Le Plessis Hebert (FR); RIDELAIRE, Pascal, F-27950 Saint Marcel (FR)
(74) Mandataire: Cabinet Beau de Loménie
(86) Numéro de dépôt international: PCT/FR2015/052734
(87) Numéro de publication internationale: WO 2016/059332

(56) Documents cités:
- US-A- 4 005 916
- US-A1- 2005 025 977
- US-A1- 2011 167 587

## Description

### Arrière-plan de l'invention

Le présent exposé concerne le domaine des paliers fluides hydrostatiques alvéolés destinés à supporter des arbres rotatifs notamment dans des turbopompes pour moteur fusée de mise sous pression de fluide.

Comme indiqué dans la demande de brevet français n° 2 809 782, un tel palier comprend un stator annulaire dans lequel un rotor, constituant par exemple l'arbre d'une turbopompe, est logé. Le stator comprend, sur sa surface interne annulaire, des alvéoles alimentées en fluide par des orifices qui débouchent sur sa surface externe. Ainsi, le rotor est maintenu en sustentation dans le stator, par la mince couche de fluide sous pression introduite par les orifices dans les alvéoles.

Plus précisément, la demande de brevet français n° 2 809 782 s'intéresse à un palier fluide hydrostatique comprenant un stator cylindrique comprenant sur sa surface interne, une bague constituée d'un assemblage d'une plaque métallique, comportant des orifices qui coopèrent avec les orifices d'introduction de fluide, avec une couche de matériau composite autolubrifiant qui comprend des alvéoles disposées autour des orifices.

Un tel palier présente une épaisseur de couche de matériau composite sur sa surface interne autorisant une usure de celle-ci sans risque de dommages irrémédiables sur l'arbre ou le palier en cas de contacts arbre-palier, ce qui permet également d'avoir des phases transitoires sans assistance.

Le procédé de fabrication d'un tel palier, tel que décrit dans la demande de brevet français n° 2809782 et brièvement exposé ci-après en référence aux figures 1 à 3 ci-jointes, comprend les étapes d'assemblage d'une couche d'un matériau composite autolubrifiant 3 sur une surface d'une plaque métallique plane 2 dont les dimensions correspondent à la développée de la surface interne du stator, d'usinage d'alvéoles 5 dans l'épaisseur de la couche du matériau composite de l'assemblage 1, de cintrage de l'assemblage 1 sous forme de bague fendue 6, d'insertion de l'assemblage en forme de bague fendue 6 sur la surface interne du stator 4, et d'usinage d'orifices 7 dans l'épaisseur du stator et dans l'assemblage inséré au niveau des alvéoles 5.

Ce procédé est efficace et fiable. Cependant, il nécessite l'utilisation d'une plaque métallique plane devant recevoir le matériau composite. La longueur de cette plaque doit être calculée avec une grande précision, sur la base de la développée de cette surface cylindrique. De plus, le cintrage de la plaque sous la forme d'une bague fendue avant sa mise en place dans le stator, est une étape délicate, qui affecte la géométrie des alvéoles. On relève encore que les orifices sont usinés à travers le sandwich comprenant le matériau de base du stator, le matériau de la plaque et le matériau composite. Ces trois matériaux ayant des duretés différentes, l'usinage est relativement complexe.

Le document US 4 005 916 divulgue un dispositif de palier fluide hydrostatique comprenant un palier avec une surface interne alvéolée.

### Objet et résumé de l'invention

Il existe donc un besoin pour un procédé de fabrication d'un palier fluide hydrostatique comprenant un stator avec une surface cylindrique interne alvéolée, qui soit sensiblement exempt des inconvénients précités.

Ainsi, selon un aspect, l'invention concerne un procédé de fabrication d'un palier fluide hydrostatique comprenant un stator avec une surface cylindrique interne alvéolée, le procédé comprenant :
- le dépôt d'un revêtement en matériau métallique sur la surface interne du corps du stator ;
- l'imprégnation dudit revêtement avec un matériau composite autolubrifiant ;
- l'usinage d'alvéoles internes dans l'épaisseur du revêtement et l'usinage d'orifices débouchant dans les alvéoles.

Ainsi, avec l'invention, le matériau métallique est directement déposé sur la surface interne du stator et imprégné en matériau composite autolubrifiant alors qu'il revêt déjà cette surface. On évite ainsi de recourir à une plaque plane, devant être découpée aux bonnes dimensions et cintrée, tout en rendant possible la présence d'un revêtement de matériau composite d'épaisseur significative. Le revêtement métallique adhère efficacement à la surface interne du corps de stator et le matériau composite est lui-même solidarisé à ce revêtement métallique, qu'il pénètre dans son épaisseur par imprégnation. Ainsi, le revêtement composite autolubrifiant, formé du revêtement métallique imprégné de matériau composite autolubrifiant et sur la même épaisseur significative que ce dernier, est efficacement solidarisé à la surface interne du corps du stator. Par ailleurs, les alvéoles sont usinées dans le revêtement composite autolubrifiant et peuvent avoir une géométrie très précise, non affectée par une opération postérieure à leur usinage telle qu'un cintrage. Les alvéoles peuvent être usinées sur un centre de tournage équipé d'une broche de fraisage 5 axes et équipée d'une tête à renvoi d'angle, en particulier une tête à renvoi d'angle de type UGV (pour Ultra Grande Vitesse), à commande numérique de précision. En outre, l'usinage des orifices est simplifié par rapport à l'art antérieur précité, puisque la plaque intermédiaire cintrée est supprimée.

Optionnellement, le matériau métallique comprend du bronze

Optionnellement, le matériau composite autolubrifiant comprend du polytétrafluoroéthylène.

Optionnellement, après l'imprégnation du revêtement et en particulier pendant l'usinage des alvéoles internes, l'alésage de la surface interne revêtue subit un réalésage.

Avec l'invention, cette étape de rectification de l'alésage formé à la surface interne du corps du stator, peut-être réalisée alors que le revêtement est en place sur cette surface, avec une grande précision. Ce réalésage peut être réalisé avec un outil coupant ou par rectification de la surface interne du corps du stator. Par ailleurs, la rectification peut être réalisée dans la même opération que l'usinage des alvéoles, sans démontage. Optionnellement, l'ébavurage automatisé des arêtes des alvéoles peut être réalisé dans cette opération, par des outils d'ébavurage.

Optionnellement, le dépôt du revêtement comprend la projection thermique de particules du matériau métallique sur la surface interne du stator.

Cette technique s'avère particulièrement appropriée à la mise en œuvre du procédé de l'invention. D'une part, elle est flexible d'utilisation, en particulier dans la mesure où elle permet de faire varier l'épaisseur du revêtement. En effet, avec cette technique, le matériau métallique est projeté à la surface interne du stator, à l'aide d'un pistolet de projection animé d'un mouvement relatif par rapport à la surface. Pour augmenter l'épaisseur du revêtement, il suffit d'agir sur la vitesse relative entre le pistolet et le stator, ou bien de réaliser une ou plusieurs passes supplémentaires du pistolet.

De plus, de manière surprenante, les inventeurs ont constaté que cette technique permet de favoriser l'imprégnation du revêtement avec le matériau composite, car le revêtement obtenu avec cette technique présente une certaine porosité, son taux volumique de porosité pouvant être compris entre 1% et 10%.

Optionnellement, le dépôt du revêtement est réalisé dans un environnement moins oxydant que l'air, en particulier dans une enceinte fermée dans laquelle règne un gaz neutre.

Ceci permet d'éviter l'oxydation à l'interface entre le revêtement et la surface revêtue. Ce gaz neutre est par exemple de l'azote.

Optionnellement, le dépôt du revêtement comprend la réalisation d'au moins une couche interne de revêtement contre la surface cylindrique interne et la réalisation d'au moins une couche supérieure de revêtement contre ladite couche interne, la couche supérieure présentant une porosité supérieure à la porosité de la couche interne.

La ou les couches internes permettent d'assurer la liaison entre le revêtement et la surface revêtue. Il est donc intéressant qu'elles aient une faible porosité, avec par exemple un taux de porosité de l'ordre de 1% ou moins. En revanche, il est intéressant que la ou les couches supérieure aient une porosité plus grande, ce qui favorise leur imprégnation par le matériau autolubrifiant.

Optionnellement, le dépôt du revêtement est suivi d'un traitement thermique qui précède l'imprégnation du revêtement.

Ce traitement thermique permet de relaxer les contraintes dans le revêtement ou entre le revêtement et la surface interne du corps du stator et d'homogénéiser le revêtement avant son imprégnation. Ce traitement thermique peut être une trempe.

Optionnellement, l'imprégnation du revêtement comprend l'application du matériau composite sur le revêtement et son pressage contre le revêtement.

Optionnellement, l'imprégnation du revêtement comprend l'application du matériau composite autolubrifiant sur le revêtement sous la forme d'une pâte comprenant un composant autolubrifiant.

### Brève description des dessins

D'autres caractéristiques et avantages de l'invention ressortiront de la description suivante d'un mode de réalisation de l'invention, donné à titre d'exemple non limitatifs, en référence aux dessins annexés, sur lesquels :
- les figures 1 à 3, déjà décrites, illustrent le procédé de l'art antérieur ;
- la figure 4 est une vue isométrique partielle du corps d'un stator, avant le dépôt d'un revêtement sur sa surface interne ;
- la figure 5 illustre le dépôt du revêtement par projection ;
- la figure 6 illustre l'application du matériau composite autolubrifiant sur le revêtement ;
- la figure 7 illustre le pressage du matériau composite contre le revêtement ;
- la figure 8 illustre la phase d'usinage des alvéoles et d'usinage des orifices débouchant dans ces alvéoles ; et
la figure 9 est une vue isométrique partielle du stator.

### Description détaillée de l'invention

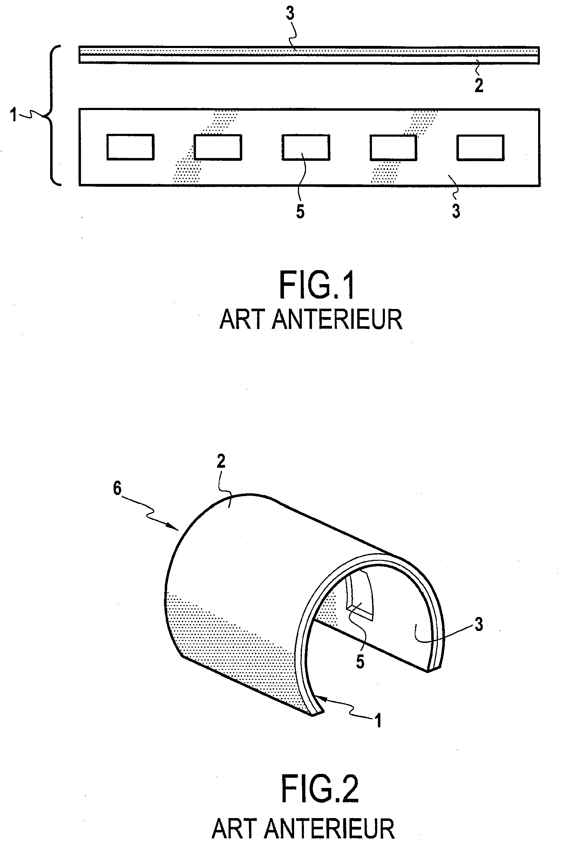

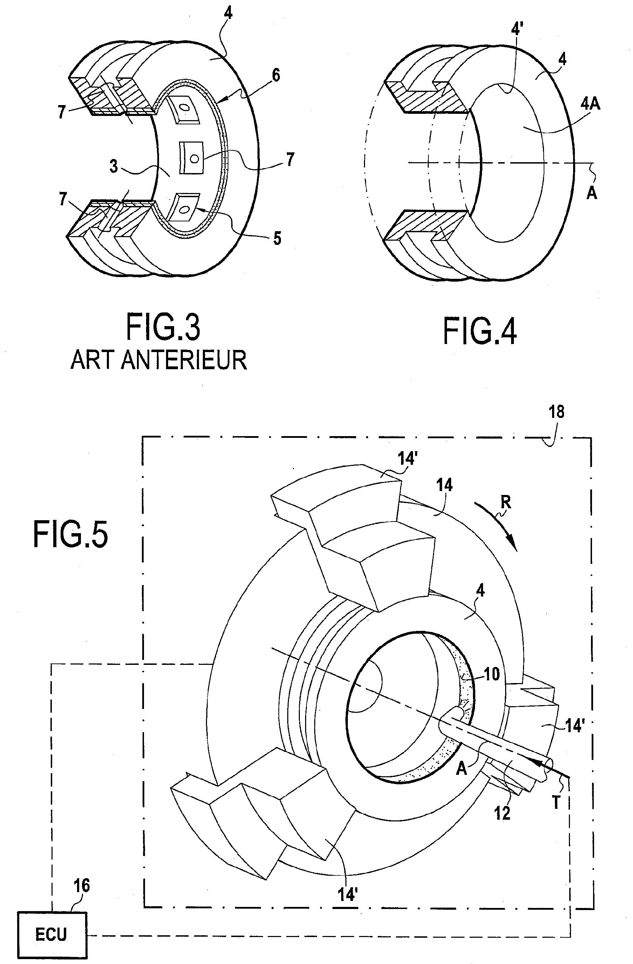

Comme le procédé de l'art antérieur décrit en relation avec les figures 1 à 3, celui de la présente invention s'applique à un corps de stator 4. Ce corps est illustré sur la figure 4. Il s'agit d'un corps cylindrique annulaire ayant une surface interne 4A cylindrique qui délimite un alésage central 4'. Par exemple, ce corps 4 peut être réalisé dans un alliage de forte dureté, en particulier supérieure à 300HB, voire à 330HB, par exemple un alliage connu sous la dénomination Inconel 718.

La figure 5 illustre le dépôt d'un revêtement 10 sur la surface cylindrique interne du corps 4. En l'espèce, ce dépôt est réalisé par projection à l'aide d'un pistolet de projection 12 dont la tête est dirigée vers la surface 4A.

Sur la figure 5, le corps 4 est tenu dans un support 14, dont les mors 14' enserrent le corps. Le corps 4 et le pistolet 12 sont mobiles l'un par rapport à l'autre. Par exemple, le pistolet 12 peut être mobile en translation T parallèlement à l'axe A de la surface interne du corps 4, et le support 14 peut être mobile en rotation R autour de cet axe. Ces déplacements sont commandés par une Unité de Contrôle Electronique ou ECU 16, de manière à être synchronisés, en tenant compte également du débit de projection du pistolet, pour obtenir l'épaisseur souhaitée de revêtement 10.

Ce dispositif de dépôt du revêtement peut être disposé dans une enceinte 18 dans laquelle règne une atmosphère non oxydante ou, du moins, moins oxydante que l'air ambiant. En particulier, cette enceinte est remplie d'un gaz neutre tel que de l'azote.

Le matériau métallique utilisé pour former le revêtement 10 peut être de l'aluminium, du cuivre, de l'acier inoxydable, du nickel ou bien un alliage à base de ces matières, en particulier un alliage d'aluminium et de nickel. Ce matériau peut avantageusement être du bronze.

Le matériau métallique peut être projeté par projection thermique. Il peut par exemple s'agir d'une projection HVOF (pour « High Velocity Oxy-Fuel ») ou projection par flamme supersonique, d'une projection plasma dans laquelle les particules de matériau sont fondues et accélérées par un plasma gazeux, ou encore d'une projection dynamique à froid (ou « cold spray ») dans laquelle les particules sont accélérées et projetées à l'état de poudre sur la surface 4A du corps 4.

Les particules de matériau métallique utilisées pour la projection ont par exemple un diamètre équivalent compris entre 5µm et 40µm, ceci en particulier lorsque la technique de projection utilisée est la projection dynamique à froid.

Pour obtenir l'épaisseur de revêtement souhaitée, le dépôt du revêtement peut se faire en plusieurs couches superposées, par exemple réalisées par plusieurs passes successives du pistolet 12. Dans ce cas, il est intéressant que la porosité varie en fonction de la couche, pour augmenter à mesure que l'on s'éloigne de la paroi 4A du corps 4. Par exemple, le taux volumétrique de porosité de la couche interne, au contact de la surface 4A du corps 4, peut être de l'ordre de 1%, tandis que celui de la couche supérieure la plus proche de l'axe A peut être de l'ordre de 10%.

Une fois le revêtement 10 réalisé, on procède à son imprégnation par un matériau composite autolubrifiant.

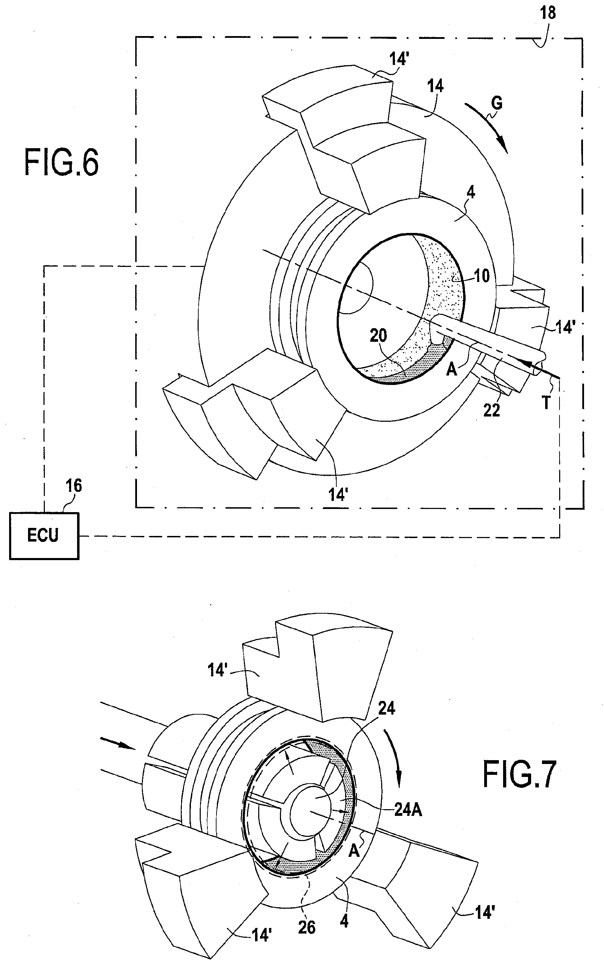

Pour cela, on applique d'abord une couche de matériau composite autolubrifiant 20 sur le revêtement 10, comme le montre la figure 6. Ce matériau peut être appliqué sous la forme d'une pâte, par exemple à l'aide d'un applicateur 22 déplaçable par rapport au stator 4. Par exemple, le stator est maintenu par le support 14 de la figure 5 ou un support analogue, et peut être déplacé en rotation R, tandis que l'applicateur 22 peut être déplacé en translation T.

Ensuite, on réalise un pressage du matériau composite 20 contre le revêtement 10. C'est ce que montre la figure 7, sur laquelle on voit que, alors que le corps de stator 4 est porté par des mors 14' analogues à ceux de la figure 4, on introduit dans l'alésage central 4' de ce corps un mandrin expansible 24. Le mandrin comporte des secteurs 24A qui, à partir d'une configuration de repos permettant l'introduction du mandrin dans l'alésage 4', peuvent être déplacés radialement vers l'extérieur pour déployer le mandrin 24. Cette expansion exerce une pression sur la couche de matériau composite 20 et tend à faire pénétrer ce dernier dans les pores du revêtement 10.Par ailleurs, on peut réaliser le pressage en plusieurs phases successives, entre lesquelles le mandrin 24 et le corps de stator sont déplacés angulairement l'un par rapport à l'autre pour que les zones occupées par les interstices entre les secteurs 24A lors d'une phase, soient recouvertes par les secteurs lors d'une étape ultérieure.

L'application du matériau composite sur le revêtement 10 peut être précédé d'un traitement thermique de ce revêtement, en particulier une trempe.

La pâte de matériau composite est ainsi durcie lorsque l'on réalise le pressage. Lors du pressage, ce matériau est confiné radialement. Pour éviter que le matériau composite pressé ne s'échappe axialement du stator, on peut utiliser des anneaux de confinement 26 ou équivalent, plaqués aux extrémités axiales du corps de stator et recouvrant axialement le revêtement 10 et la couche de matériau composite 20.

Le matériau composite autolubrifiant peut comprendre du polytétrafluoroethylène ou PTFE. Pour son application sur le revêtement, ce matériau est par exemple mis sous forme d'une pâte.

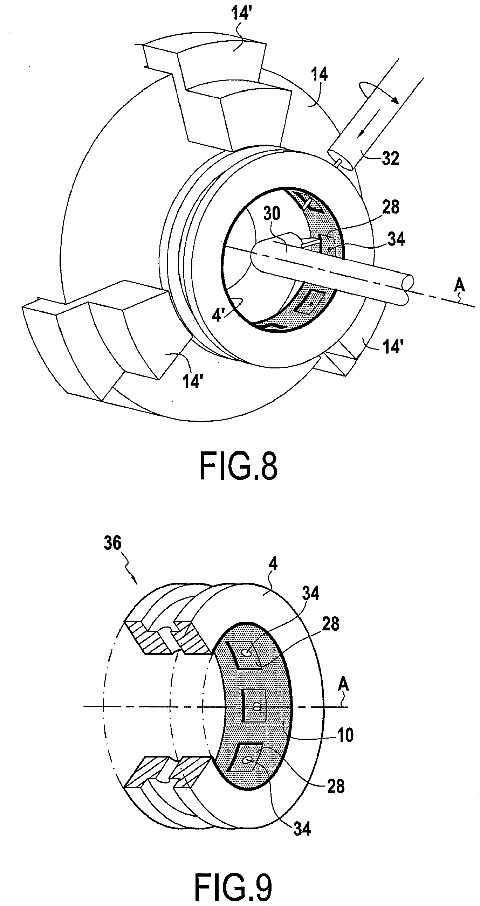

La figure 8 montre l'étape d'usinage qui suit l'étape d'imprégnation. Dans cette étape d'usinage, on usine des alvéoles internes 28 dans l'épaisseur du revêtement 10 à l'aide d'une fraise 30 montée dans une tête à renvoi d'angle UGV à commande numérique ou analogue. Pendant cet usinage, le corps de stator est toujours maintenu par des mors 14' ou analogue. La profondeur des alvéoles 28 est inférieure à l'épaisseur du revêtement 10 imprégné de matériau composite, cette profondeur et cette épaisseur étant mesurées radialement. Par exemple, la profondeur des alvéoles est de 0,3mm à 0,6mm, tandis que l'épaisseur du revêtement est de 0,8mm à 2mm.

Sur la figure 8, on a également schématisé un outil de perçage 32, qui est monté dans la tête de broche de fraisage 5 axes et qui sert à percer des orifices 34 d'alimentation des alvéoles en fluide. Ces orifices d'alimentation, en l'espèce au nombre de un par alvéole, sont orientés radialement et traversent de part en part la paroi du stator 4. Ces orifices 34 permettent d'alimenter en fluide sous pression les alvéoles 28 du palier pour réaliser le mécanisme de sustentation de l'arbre rotatif propre aux paliers hydrostatiques. Eventuellement, les alvéoles peuvent avoir un nombre différent d'orifices d'alimentation. Elles peuvent également avoir un ou plusieurs autres orifices servant à assurer d'autres fonctions, par exemple à mesurer la pression via un capteur.

Les opérations d'usinage des alvéoles et de perçage de ces alvéoles à l'aide d'outils coupants peuvent être réalisées dans le même poste de travail et fonctionner en temps masqué. On peut également dans le même poste procéder à un réalésage final de la surface de l'alésage 4' du stator. Ce réalésage final, effectué sur le revêtement 10 imprégné de matériau composite autolubrifiant, peut être réalisé en même temps que l'usinage des alvéoles 28 ou après cet usinage, voire après l'usinage des orifices 34.

La figure 9 montre le stator 36 de palier fluide hydrostatique obtenu grâce à l'invention. Ce stator comprend le corps 4, dont la surface interne 4A est revêtue du revêtement métallique 10 dans lequel le matériau composite autolubrifiant est imprégné. Le revêtement métallique adhère directement à la surface interne d'origine du corps du stator, sans interposition d'une plaque d'interface rapportée, contrairement à ce que divulgue la demande de brevet français n° 2 809 782. Le stator 36 présente également, sur la surface interne revêtue, les alvéoles 28 dont les fonds sont également recouverts de revêtement métallique imprégné, et sa paroi annulaire est traversée par les orifices 34 d'alimentation en fluide de ces alvéoles.

Le revêtement composite autolubrifiant, c'est-à-dire le revêtement métallique imprégné de matériau composite autolubrifiant, peut présenter une épaisseur importante, par exemple comprise entre 0,8mm à 2mm. Il permet donc des opérations d'ajustage telles qu'un réalésage final ou de reprise en ligne des paliers telles que l'appairage ou l'alignement de deux paliers.

En raison toujours de l'épaisseur conséquente de revêtement composite autolubrifiant sur la surface interne du stator de palier, les phases transitoires de démarrage et d'arrêt de turbopompes, notamment cryogéniques, sont facilitées par la tolérance accrue des contacts arbre-paliers, ce qui permet aussi à de tels paliers d'être résistants aux cas de pannes grâce à leur endurance vis-à-vis de ces contacts.

## Revendications

1. Procédé de fabrication d'un palier fluide hydrostatique comprenant un stator (36) avec une surface cylindrique interne alvéolée, **caractérisé en ce qu'**il comprend les étapes successives suivantes :
- le dépôt d'un revêtement (10) en matériau métallique sur la surface interne (4A) du corps (4) du stator (36) ;
- l'imprégnation dudit revêtement (10) avec un matériau composite autolubrifiant (20) ;
- l'usinage d'alvéoles internes (28) dans l'épaisseur du revêtement (10) et l'usinage d'orifices (34) débouchant dans les alvéoles.

2. Procédé selon la revendication 1, dans lequel le matériau métallique comprend du bronze.

3. Procédé selon la revendication 1 ou 2, dans lequel le matériau composite autolubrifiant comprend du polytétrafluoroéthylène.

4. Procédé selon l'une quelconque des revendications 1 à 3, dans lequel, après l'imprégnation du revêtement (10) et en particulier pendant l'usinage des alvéoles internes (28), la surface interne revêtue subit un réalésage.

5. Procédé selon l'une quelconque des revendications 1 à 4, dans lequel le dépôt du revêtement (10) comprend la projection thermique de particules du matériau métallique sur la surface interne (4A) du stator.

6. Procédé selon l'une quelconque des revendications 1 à 5, dans lequel le dépôt du revêtement (10) est réalisé dans un environnement moins oxydant que l'air, en particulier dans une enceinte fermée (18) dans laquelle règne un gaz neutre.

7. Procédé selon l'une quelconque des revendications 1 à 6, dans lequel le dépôt du revêtement (10) comprend la réalisation d'au moins une couche interne de revêtement contre la surface cylindrique interne (4A) et la réalisation d'au moins une couche supérieure de revêtement contre ladite couche interne, la couche supérieure présentant une porosité supérieure à la porosité de la couche interne.

8. Procédé selon l'une quelconque des revendications 1 à 7, dans lequel le dépôt du revêtement est suivi d'un traitement thermique qui précède l'imprégnation du revêtement.

9. Procédé selon l'une quelconque des revendications 1 à 8, dans lequel l'imprégnation du revêtement (10) comprend l'application du matériau composite (20) sur le revêtement et son pressage contre le revêtement.

10. Procédé selon l'une quelconque des revendications 1 à 9, dans lequel l'imprégnation du revêtement (10) comprend l'application du matériau composite autolubrifiant (20) sur le revêtement sous la forme d'une pâte.

11. Procédé selon l'une quelconque des revendications 1 à 10, dans lequel le revêtement a une épaisseur de 0,8mm à 2mm, et les alvéoles ont une profondeur de 0,3 à 0,6mm.

## Patentansprüche

1. Verfahren zur Herstellung eines hydrostatischen Fluidlagers, umfassend einen Stator (36) mit einer mit Vertiefungen versehenen zylindrischen Innenfläche, **dadurch gekennzeichnet, dass** es die folgenden aufeinanderfolgenden Schritte umfasst:
- die Abscheidung einer Beschichtung (10) aus metallischem Material auf der Innenfläche (4A) des Körpers (4) des Stators (36),
- die Imprägnierung der genannten Beschichtung (10) mit einem selbstschmierenden Verbundmaterial (20),
- das Fräsen der inneren Vertiefungen (28) in der Dicke der Beschichtung (10) und das Fräsen von Öffnungen (34), die in die Vertiefungen münden.

2. Verfahren gemäß Anspruch 1, wobei das metallische Material Bronze umfasst.

3. Verfahren gemäß Anspruch 1 oder 2, wobei das selbstschmierende Verbundmaterial Polytetrafluorethylen umfasst.

4. Verfahren gemäß einem der Ansprüche 1 bis 3, wobei nach der Imprägnierung der Beschichtung (10) und insbesondere während des Fräsens der inneren Vertiefungen (28) die beschichtete Innenfläche einem Aufbohren unterzogen wird.

5. Verfahren gemäß einem der Ansprüche 1 bis 4, wobei die Abscheidung der Beschichtung (10) ein thermisches Sprühen von Partikeln des metallischen Materials auf die Innenfläche (4A) des Stators umfasst.

6. Verfahren gemäß einem der Ansprüche 1 bis 5, wobei die Abscheidung der Beschichtung (10) in einer weniger oxidierenden Atmosphäre als Luft durchgeführt wird, insbesondere in einer geschlossenen Hülle (18), in der ein neutrales Gas vorherrscht.

7. Verfahren gemäß einem der Ansprüche 1 bis 6, wobei die Abscheidung der Beschichtung (10) die Bildung mindestens einer Innenschicht der Beschichtung gegen die Zylinderinnenfläche (4A) und die Bildung mindestens einer Oberschicht der Beschichtung gegen die genannte Innenschicht umfasst, wobei die Oberschicht eine höhere Porosität aufweist als die Porosität der Innenschicht.

8. Verfahren gemäß einem der Ansprüche 1 bis 7, wobei die Abscheidung der Beschichtung von einer thermischen Behandlung gefolgt wird, die der Imprägnierung der Beschichtung vorausgeht.

9. Verfahren gemäß einem der Ansprüche 1 bis 8, wobei die Imprägnierung der Beschichtung (10) das Aufbringen des Verbundmaterials (20) auf die Beschichtung und sein Pressen gegen die Beschichtung umfasst.

10. Verfahren gemäß einem der Ansprüche 1 bis 9, wobei die die Imprägnierung der Beschichtung (10) das Aufbringen des selbstschmierenden Verbundmaterials (20) auf die Beschichtung in der Form einer Paste umfasst.

11. Verfahren gemäß einem der Ansprüche 1 bis 10, wobei die Beschichtung eine Dicke von 0,8 mm bis 2 mm aufweist, und die Vertiefungen eine Tiefe von 0,3 bis 0,6 mm aufweisen.

## Claims

1. A method of fabricating a hydrostatic fluid bearing comprising a stator (36) having a cylindrical inside surface that includes cells, the method being **characterized in that** it comprises, successively:
• depositing a coating (10) of metal material on the inside surface (4A) of the body (4) of the stator (36);
• impregnating said coating (10) with a self-lubricating composite material (20);
• machining internal cells (28) in the thickness of the coating (10), and machining orifices (34) leading into the cells.

2. A method according to claim 1, wherein the metal material comprises bronze.

3. A method according to claim 1 or claim 2, wherein the self-lubricating composite material comprises polytetrafluoroethylene.

4. A method according to any one of claims 1 to 3, wherein after impregnating the coating (10) and in particular while machining the internal cells (29), the coated inside surface is subjected to re-boring.

5. A method according to any one of claims 1 to 4, wherein the coating (10) is deposited by thermally spraying particles of metal material against the inside surface (4A) of the stator.

6. A method according to any one of claims 1 to 5, wherein the coating (10) is deposited in an environment that is less oxidizing than air, in particular in a closed enclosure (18) in which there is an inert gas.

7. A method according to any one of claims 1 to 6, wherein the coating (10) is deposited by making at least one internal layer of coating against the cylindrical inside surface (4A) and making at least one top layer of coating against said internal layer, the top layer presenting porosity that is greater than the porosity of the internal layer.

8. A method according to any one of claims 1 to 7, wherein deposition of the coating is followed by heat treatment, that precedes impregnating the coating.

9. A method according to any one of claims 1 to 8, wherein the coating (10) is impregnated by applying the composite material (20) to the coating and pressing it against the coating.

10. A method according to any one of claims 1 to 9, wherein the coating (10) is impregnated by applying the self-lubricating composite material (20) to the coating in the form of a paste.

11. A method according to any one of claims 1 to 10, wherein the coating has a thickness in the range 0.8 mm to 2 mm, and the cells have a depth in the range 0.3 mm to 0.6 mm.
